# EUROPEAN PATENT APPLICATION

(11) **EP 4 379 993 A2**
(43) Date of publication of application: **05.06.2024**
(21) Application number: 23213336.3
(22) Date of filing: 30.11.2023
(51) Int. Cl.: H02J 3/38, H02S 40/34, H02S 40/36

(54) **PHOTOVOLTAIC CONNECTION MODULE, COMMUNICATION POWER SUPPLY, AND PHOTOVOLTAIC POWER GENERATION SYSTEM**

(30) Priority: 30.11.2022 CN 202223185592 U
(71) Applicant: Huawei Digital Power Technologies Co., Ltd., Shenzhen, Guangdong 518043 (CN)
(72) Inventor: ZHANG, Shijian, Shenzhen 518043 (CN); ZHENG, Mugui, Shenzhen 518043 (CN)
(74) Representative: Gill Jennings & Every LLP

(57) **Abstract**

A photovoltaic connection module, a communication power supply, and a photovoltaic power generation system are provided. The photovoltaic connection module includes: a first input port, a second input port, a first output port, a second output port, a protection unit, a converter, a protocol conversion unit, and a housing. The photovoltaic connection module integrates components having functions such as electric energy conversion, circuit protection, and communication conversion, for example, a protection unit, a converter, and a protocol conversion unit, so that a large quantity of components are integrated inside one housing. This reduces a quantity of components of a photovoltaic power generation system and complexity of wiring of the photovoltaic power generation system, and improves reliability of the photovoltaic power generation system. A plurality of photovoltaic modules are connected in series, and are directly electrically connected to an input port of the photovoltaic connection module. A junction box is not needed between the plurality of photovoltaic modules and the photovoltaic connection module, and electric energy of the plurality of photovoltaic modules is directly input to the photovoltaic connection module. This reduces a quantity of components of the photovoltaic power generation system, improves stability of the photovoltaic power generation system, and reduces costs of the photovoltaic power generation system.

## Description

### TECHNICAL FIELD

The application relates to the field of photovoltaic technologies, and in particular, to a photovoltaic connection module, a communication power supply, and a photovoltaic power generation system.

### BACKGROUND

In recent years, as the global temperature keeps rising, peak carbon dioxide emissions and carbon neutralization has become a core task for important countries to cope with the climate change. Clean energy has become a future development trend to reduce carbon emissions. Clean energy includes solar energy, wind energy, water energy, tidal energy, and the like. Generally, clean energy cannot be directly used but can be converted into electricity for human to use. For example, a photovoltaic power generation system is to convert solar energy into electric energy.

Photovoltaic power generation is used as an example. A photovoltaic power station is deployed with a large quantity of photovoltaic modules, so that the photovoltaic modules convert solar energy into electric energy. The electric energy of the plurality of photovoltaic modules is converged to a junction box, and then accesses a power supply by using components such as a control unit and a direct-current/direct-current (DC/DC) converter. In a process of transmission of the electric energy of the photovoltaic modules, relatively low reliability in photovoltaic power generation is caused by disadvantages including a relatively large quantity of components through which the electric energy passes, complex wring cause.

### SUMMARY

To resolve the foregoing problem, embodiments of this application provide a photovoltaic connection module, a communication power supply, and a photovoltaic power generation system, so that components implementing functions such as electric energy conversion, circuit protection, and communication conversion can be integrated inside one housing. This reduces a quantity of components of the photovoltaic power generation system and complexity of wiring of the photovoltaic power generation system, and improves reliability of the photovoltaic power generation system.

Therefore, embodiments of this application use the following technical solutions.

According to a first aspect, an embodiment of this application provides a photovoltaic connection module, including: a first input port, a second input port, a first output port, a second output port, a protection unit, a converter, a protocol conversion unit, and a housing, where the protection unit and the protocol conversion unit are disposed inside the housing; the first input port is configured to be coupled to a plurality of photovoltaic modules connected in series, and receive a direct current of the plurality of photovoltaic modules connected in series; an input end of the protection unit is coupled to the first input port, and the protection unit is configured to: disconnect the first input port from the first output port when a voltage value and/or a current value of a direct current input by the first input port exceed/exceeds a specified threshold; an input end of the converter is coupled to an output end of the protection unit, and an output end of the converter is coupled to the first output port and is configured to convert the direct current input by the first input port into a direct current with a specified voltage; and the protocol conversion unit is coupled between the second input port and the second output port, and is configured to convert a communication protocol that is of the plurality of photovoltaic modules connected in series and that is input from the second input port into a communication protocol different from the communication protocol of the plurality of photovoltaic modules connected in series.

In this implementation, the photovoltaic connection module may integrate components having functions such as electric energy conversion, circuit protection, and communication conversion, for example, a protection unit, a converter, and a protocol conversion unit, so that a large quantity of components are integrated inside one housing. This reduces a quantity of components of a photovoltaic power generation system and complexity of wiring of the photovoltaic power generation system, and improves reliability of the photovoltaic power generation system.

A plurality of photovoltaic modules are connected in series, and may be directly and electrically connected to an input port of the photovoltaic connection module. A junction box may not be needed between the plurality of photovoltaic modules and the photovoltaic connection module, and electric energy of the plurality of photovoltaic modules is directly input to the photovoltaic connection module. This reduces a quantity of components of the photovoltaic power generation system, improves stability of the photovoltaic power generation system, and reduces costs of the photovoltaic power generation system.

In an implementation, the protection unit includes a control unit, a sampling circuit, and a switch circuit, where the switch circuit is electrically connected between the first input port and the first output port, and is configured to transmit, to the first output port, the direct current input by the first input port; an input end of the sampling circuit is coupled between the first input port and the switch circuit, an output end of the sampling circuit is coupled to an input end of the control unit, and the sampling circuit is configured to collect the voltage value and/or the current value of the direct current input by the first input port; and an output end of the control unit is coupled to the switch circuit, and is configured to: receive the voltage value and/or the current value of the direct current input by the first input port; and when the voltage value and/or the current value of the direct current input by the first input port exceed/exceeds the specified threshold, control the switch circuit to be in a disconnected state.

In an implementation, the switch circuit is a high-voltage-resistant MOS transistor.

In this implementation, the switch circuit may be a high-voltage-resistant component, so that the photovoltaic connection module can receive a high voltage input by the plurality of photovoltaic modules connected in series.

In an implementation, the converter is a direct-current/direct-current converter.

In this implementation, the converter may be a direct-current/direct-current converter, so that the photovoltaic connection module converts a high-voltage direct current into a direct current with a specified voltage, and the photovoltaic connection module can supply power to a battery or a direct-current load.

In an implementation, the converter is a direct-current/alternating-current converter.

In this implementation, the converter may be a direct-current/alternating-current converter, so that the photovoltaic connection module converts a high-voltage direct current into an alternating current with a specified voltage, and the photovoltaic connection module can supply power to an alternating-current load.

In an implementation, the protocol conversion unit is specifically configured to convert a power line carrier communication protocol of the plurality of photovoltaic modules connected in series into a controller area network communication protocol.

In this implementation, the photovoltaic modules generally perform data transmission in a power line carrier communication manner. Power line carrier communication is a near-field communication manner, and cannot be used to perform data transmission in a long distance. The plurality of photovoltaic modules may send data, such as their own voltage signals, current signals, and working states, to the protocol conversion unit by using power line carrier communication. The protocol conversion unit may convert the data of power line carrier communication into data of a controller area network, so that the data of the plurality of photovoltaic modules can be transmitted in a long distance.

In an implementation, the first input port and the first output port are pluggable interfaces.

In this implementation, the first input port and the first output port may be pluggable interfaces, so that the photovoltaic connection module is electrically connected to an interface of another device, thereby improving adaptability of the photovoltaic connection module.

In an implementation, the second input port is coupled to the first input port.

In this implementation, the second input port may be coupled to the first input port. Data transmitted by a plurality of photovoltaic modules may enter the photovoltaic connection module from the first input port. The second input port may receive an electric power signal from the first input port, and input the electric power signal to the protocol conversion unit, so that external ports of the photovoltaic connection module can be reduced, and complexity of wiring of the photovoltaic power generation system can be reduced.

According to a second aspect, an embodiment of this application provides a communication power supply, including: at least one photovoltaic connection module according to the possible implementations of the first aspect; and a monitoring module, which is separately coupled to the at least one photovoltaic connection module, and is configured to control the at least one photovoltaic connection module.

According to a third aspect, an embodiment of this application provides a photovoltaic power generation system, including: a plurality of photovoltaic modules, where the plurality of photovoltaic modules are grouped into at least one group, and photovoltaic modules in each group are connected in series; and at least one photovoltaic connection module according to the possible implementations of the first aspect, where the at least one group of photovoltaic modules is separately coupled to the at least one photovoltaic connection module.

### BRIEF DESCRIPTION OF DRAWINGS

The following briefly describes the accompanying drawings that need to be used for describing the embodiments or describing a conventional technology.
FIG. 1 is a schematic diagram of an architecture of a photovoltaic power generation system according to an embodiment of this application;
FIG. 2 is a schematic diagram of an architecture of a communication power supply according to an embodiment of this application;
FIG. 3 is a schematic diagram of an architecture of a photovoltaic connection module according to an embodiment of this application; and
FIG. 4 is a topological circuit diagram of a protection unit according to an embodiment of this application.

### DESCRIPTION OF EMBODIMENTS

The following describes the technical solution in embodiments of this application with reference to the accompanying drawings in embodiments of this application.

In descriptions of this application, positions or positional relationships indicated by terms "center", "above", "under", "before", "behind", "left", "right", "vertical", "horizontal", "top", "bottom", "inside", "outside", and the like are based on positions or positional relationships shown in the accompanying drawings, and are merely intended for ease of describing this application and simplifying the descriptions, instead of indicating or implying that a mentioned apparatus or component needs to be provided at a specific position or needs to be constructed and operated at a specific position, and therefore shall not be understood as a limitation on this application.

In the descriptions of this application, it needs to be noted that, unless otherwise clearly specified and limited, terms "install", "connected", and "connect" need to be understood in a broad sense, for example, may be a fixed connection, may be a detachable connection, or may be a butt joint connection or an integrated connection. A person of ordinary skill in the art may understand specific meanings of the foregoing terms in this application based on a specific case.

In the descriptions of this application, the term "and/or" describes an association relationship for describing associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the descriptions of this application, the terms "first", "second", and the like are intended to distinguish between different objects, but are not intended to describe a particular order of the objects. For example, a first response message, a second response message, and the like are used to distinguish between different response messages, but are not intended to describe a particular order of the response messages.

In embodiments of this application, words such as "in an embodiment" or "for example" are used to represent giving an example, making an illustration, or giving a description. Any embodiment or design solution described as "in an embodiment" or "for example" in embodiments of this application should not be interpreted as being preferred to or having an advantage over another embodiment or design solution. Specifically, the use of the words such as "in an embodiment" or "for example" is intended to present a related concept in a specific manner.

In the descriptions of this specification, the described specific features, structures, materials, or characteristics may be combined in a proper manner in any one or more embodiments or examples.

To resolve a problem that reliability of an existing photovoltaic power generation system is relatively low, embodiments of this application provide a photovoltaic power generation system, a communication power supply, and a photovoltaic connection module.

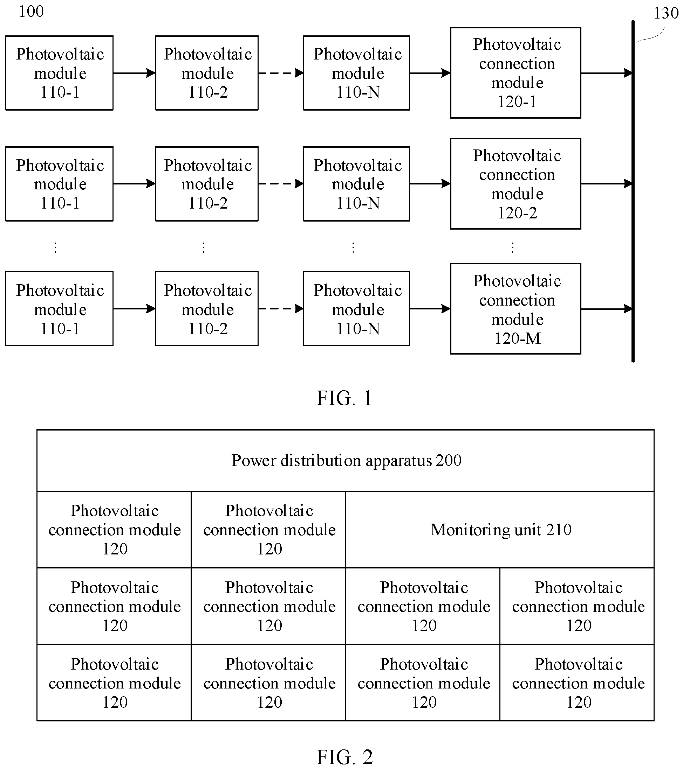

FIG. 1 is a schematic diagram of an architecture of a photovoltaic power generation system according to an embodiment of this application. As shown in FIG. 1, the photovoltaic power generation system 100 includes a plurality of photovoltaic modules 110, a plurality of photovoltaic connection modules 120, and a busbar 130. The plurality of photovoltaic modules 110 may be divided into a plurality of groups. The photovoltaic modules 110 in each group are connected in series. Output ends of the groups of photovoltaic modules 110 are separately and electrically connected to input ends of the plurality of photovoltaic connection modules 120. Output ends of the plurality of photovoltaic connection modules 120 are connected in parallel to the busbar 130.

In this embodiment of this application, the photovoltaic modules 110 in each group are connected in series, and may be directly and electrically connected to an input end of the photovoltaic connection module 120. A junction box may not be needed between the photovoltaic modules 110 in each group and the photovoltaic connection module 120, and electric energy of the photovoltaic modules 110 in each group is directly input to the photovoltaic connection module 120. This reduces a quantity of components of the photovoltaic power generation system 100, improves stability of the photovoltaic power generation system 100, and reduces costs of the photovoltaic power generation system 100.

In this embodiment of this application, the photovoltaic connection module 120 includes components such as a control unit, a protection unit, a protocol conversion unit, and a DC/DC converter. In the photovoltaic power generation system 100, components implementing functions such as electric energy conversion, circuit protection, and communication conversion are integrated into one module. This reduces a quantity of components of the photovoltaic power generation system 100 and wiring complexity of the photovoltaic power generation system 100, and improves reliability of the photovoltaic power generation system 100.

FIG. 2 is a schematic diagram of an architecture of a communication power supply according to an embodiment of this application. As shown in FIG. 2, the communication power supply 200 includes a monitoring unit 210 and a plurality of photovoltaic connection modules 120. The plurality of photovoltaic connection modules 120 may be integrated together. The monitoring unit 210 may be an SMU02C or another type of monitoring unit. The monitoring unit 210 is coupled to the plurality of photovoltaic connection modules 120 separately, and is configured to monitor working states of the plurality of photovoltaic connection modules 120, control the operation of the photovoltaic connection modules 120, and perform other functions.

The photovoltaic connection module 120 may be a power supply unit (PSU), a high switch unit (HSU), or another device. The PSU can convert an alternating current into a direct current. The HSU can convert a high-voltage direct current into a low-voltage direct current. In an embodiment, the HSU may include a solar supply unit (SSU) and a protocol conversion unit (PCU). The SSU is configured to convert a high-voltage direct current into a low-voltage direct current. The PCU converts one communication protocol into another communication protocol.

In this embodiment of this application, a plurality of photovoltaic connection modules 120 are integrated into the communication power supply 200, so that a quantity of components of the photovoltaic power generation system 100 and complexity of wiring of the photovoltaic power generation system 100 can be reduced. In addition, deposing the photovoltaic connection modules 120 in the communication power supply 200 can improve integration of the photovoltaic power generation system 100.

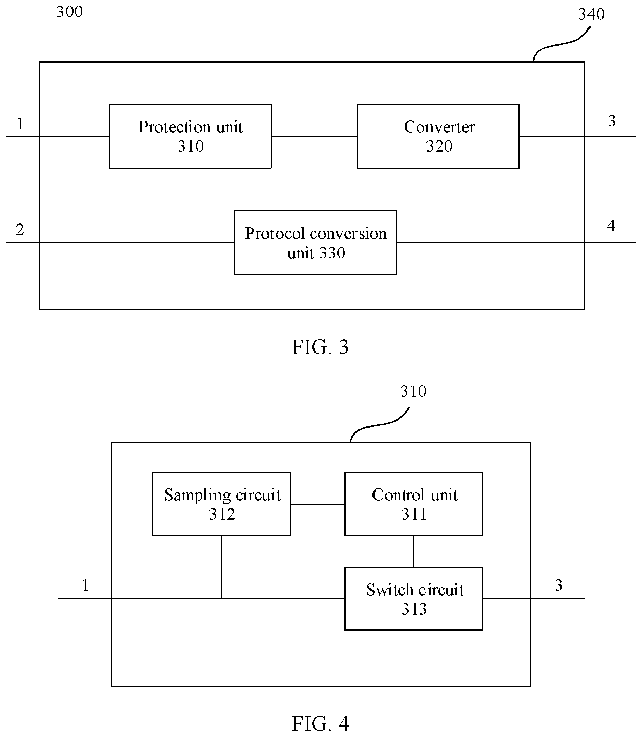

FIG. 3 is a schematic diagram of an architecture of a photovoltaic connection module according to an embodiment of this application. As shown in FIG. 3, the photovoltaic connection module 300 includes: a first input port 1, a second input port 2, a first output port 3, a second output port 4, a protection unit 310, a converter 320, a protocol conversion unit 330, and a housing 340. The first input port 1, the protection unit 310, the converter 320, and the first output port 3 are electrically connected in sequence. One end of the protocol conversion unit 330 is coupled to the second input port 2, and the other end is coupled to the second output port 4.

The protection unit 310, the converter 320, and the protocol conversion unit 330 may be disposed inside the housing 340. The photovoltaic connection module may integrate components having functions such as electric energy conversion, circuit protection, and communication conversion, for example, a protection unit, a converter, and a protocol conversion unit, so that a large quantity of components are integrated inside one housing 340. The first input port 1, the second input port 2, the first output port 3, and the second output port 4 may be disposed on the housing 340, so that each port may be electrically connected to a circuit outside the housing 340, and each port may be electrically connected to a circuit inside the housing 340.

The first input port 1 is electrically connected to a plurality of photovoltaic modules that are connected in series. The first output port 3 is electrically connected to a busbar. In this application, the first input port 1 and the first output port 3 may be pluggable interfaces, welding pins, gold wires, printed circuit boards (PCB), electrical cables, or other ports. This is not limited in this application.

The second input port 2 establishes communication connections to a plurality of photovoltaic modules that are connected in series. The second output port 4 establishes a communication connection to another communication unit. In this application, the second input port 2 and the second output port 4 may be wired interfaces, for example, gold wires, welding pins, PCBs, or wired interfaces of another type; or the second input port 2 and the second output port 4 may be wireless interfaces, for example, Bluetooth modules, near field communication (NFC) modules, or other wireless communication modules.

The protection unit 310 is electrically connected between the first input port 1 and the first output port 3, and is configured to: stay in a disconnected state when a voltage value or a current value of a direct current input by the first input port 1 exceeds a specified threshold, so that the first input port 1 is electrically disconnected from the first output port 3. In this way, when the direct current input by the first input port 1 is abnormal, the protection unit 310 can disconnect the photovoltaic connection module 300, to prevent the other components of the photovoltaic connection module 300 from being burnt or outputting an abnormal electrical signal to damage another device.

In an embodiment, as shown in FIG. 4, the protection unit 310 includes a control unit 311, a sampling circuit 312, and a switch circuit 313. The switch circuit 313 is electrically connected between the first input port 1 and the first output port 3. An input end of the sampling circuit 312 is coupled between the first input port 1 and the switch circuit 313. An output end of the sampling circuit 312 is coupled to an input end of the control unit 311. An output end of the control unit 311 is coupled to the switch circuit 313. The switch circuit 313 may be a metal-oxide semiconductor field effect transistor (MOSFET), which is subsequently referred to as an MOS transistor. An output end of the control unit 311 is coupled to a gate of the MOS transistor. In another embodiment, the sampling circuit 312 and the switch circuit 313 may be high-voltage-resistant components, so that the photovoltaic connection module 300 can receive a high voltage input by a plurality of photovoltaic modules that are connected in series.

The control unit 311 inputs a pulse width modulation (PWM) signal to the gate of the MOS transistor, so that the switch circuit 313 is in a connected state. The sampling circuit 312 collects a voltage value or a current value of a direct current input by the first input port 1, and inputs the voltage value or the current value to the control unit 311. After receiving the voltage value or the current value, the control unit 311 determines whether the voltage value or the current value is greater than a specified threshold. When the voltage value or the current value is greater than the specified threshold, the control unit 311 stops inputting the PWM signal to the gate of the MOS transistor, so that the switch circuit 313 is in a disconnected state.

In this embodiment of this application, the protection unit 310 is disposed inside the photovoltaic connection module 300, and can protect, when a voltage or a current of the direct current input from the first input port 1 is excessively high, the other components of the photovoltaic connection module 300 and another device to which the photovoltaic connection module 300 is coupled. In addition, when the photovoltaic modules are hit by a lightning stroke, the protection unit 310 can normally discharge a lightning current, thereby protecting the photovoltaic connection module 300.

The converter 320 may be a DC/DC converter or another converter. In an embodiment, when the first output port 3 is coupled to a direct-current device such as a direct-current busbar, a direct-current load, or a battery, the converter 320 is a DC/DC converter. The DC/DC converter can convert a high-voltage direct current input by the first input port 1 into a direct current with a specified voltage, so as to provide the direct current with the specified voltage for the direct-current device. The specified voltage may be a rated voltage of the direct-current device to which the first output port 3 is coupled.

In this application, the plurality of photovoltaic modules generally communicate with another device in a power line carrier communication (PLC) manner. The PLC technology is a communication manner in which a power line is used to perform transmission of data and a media signal. When data is sent by using PLC at a transmit end, a modulation technology may be used at the transmit end to modulate the data and load a high-frequency signal that carries information into a current; and then the data is transmitted over the power line. After the data is received at a receive end, first the modulated signal is taken out by using a wave filter and then demodulated, to obtain an original communication signal. At the receive end, the original communication signal may be transmitted to a computer or a telephone to implement information transmission.

In an embodiment, a PLC bidirectional transmission module includes: a modulator, an oscillator, a power amplifier, a T/R steering switch, a coupling circuit, and a demodulator. The oscillator provides a carrier signal for the modulator. When transmitting data, the PLC bidirectional transmission module sends a to-be-sent signal from the transmit end. The modulator modulates the to-be-sent signal, and then sends the modulated to-be-sent signal to a power amplifier stage for amplification, and then the modulated signal is loaded to the power line by using the T/R steering switch and the coupling circuit. When the PLC bidirectional transmission module receives data, a modulated signal sent by a transmit module enters, by using the coupling circuit and the T/R steering switch, the demodulator. The demodulator performs demodulation, extracts an original signal, and sends the original signal from the received end to a next-stage device.

In this application, the second input port 2 may be coupled to the first input port 1. Data transmitted by a plurality of photovoltaic modules may enter the photovoltaic connection module 300 from the first input port 1. The second input port 2 may receive an electric power signal from the first input port, and input the electric power signal to the protocol conversion unit 330, so that external ports of the photovoltaic connection module 300 can be reduced and complexity of wiring of the photovoltaic power generation system can be reduced.

The protocol conversion unit 330 may couple PLC interfaces of the plurality of photovoltaic modules to an interface of a communication module of another device, and convert a PLC communication protocol into another communication protocol. In this application, data is transmitted by using PLC of the plurality of photovoltaic modules to the protocol conversion unit 330. The protocol conversion unit 330 converts the data of PLC into data of another communication protocol, and sends the converted data to a bus of another communication protocol, to implement transfer of the PLC communication data to the bus of the another communication protocol.

In an embodiment, the bus of the another communication protocol is a controller area network (CAN) bus. The protocol conversion unit 330 may convert the PLC protocol into a CAN communication protocol. After receiving data of the PLC protocol, the protocol conversion unit 330 converts the received data into data of the CAN communication protocol. The protocol conversion unit 330 stores the data of the CAN communication protocol as data of a specified identity document (ID) into a corresponding CAN bus address, and waits for the CAN bus to send an instruction for reading the data.

In this embodiment of this application, PLC is a near-field communication manner, and cannot be used to perform data transmission in a long distance. The plurality of photovoltaic modules may send data, such as their own voltage signals, current signals, and working states, to the protocol conversion unit 330 by using PLC. The protocol conversion unit 330 may convert the data of PLC into data of another module, so that the data from the plurality of photovoltaic modules can be transmitted in a long distance.

In embodiments of this application, the photovoltaic connection module may integrate components having functions such as electric energy conversion, circuit protection, and communication conversion, for example, a protection unit, a converter, and a protocol conversion unit, so that a large quantity of components are integrated inside one housing. This reduces a quantity of components of a photovoltaic power generation system and complexity of wiring of the photovoltaic power generation system, and improves reliability of the photovoltaic power generation system.

A quantity of the components, types of the components, an electrical connection manner of each component, and the like of the photovoltaic connection module provided in embodiments of this application are not limited to the foregoing embodiments. All technical solutions implemented according to the principle of this application shall fall within the protection scope of this solution. Any one or more embodiments or graphical representations in this specification and technical solutions combined in a proper manner shall all fall within the protection scope of this solution.

A quantity, types, electrical connection manners, and the like of the photovoltaic connection modules of the communication power supply provided in embodiments of this application are not limited to the foregoing embodiments. All technical solutions implemented according to the principle of this application shall fall within the protection scope of this application. Any one or more embodiments or graphical representations in this specification and technical solutions combined in a proper manner shall all fall within the protection scope of this solution.

Finally, it should be noted that the foregoing embodiments are merely intended to describe the technical solutions of this application. A person of ordinary skill in the art needs to understand that, although this application is described in detail with reference to the foregoing embodiments, modifications may still be made to the technical solutions described in the foregoing embodiments or make equivalent replacements to some technical features thereof, without departing from the scope of the technical solutions in embodiments of this application.

## Claims

1. A photovoltaic connection module, comprising: a first input port (1), a second input port (2), a first output port (3), a second output port (4), a protection unit (310), a converter (320), a protocol conversion unit (330), and a housing (340), wherein the protection unit and the protocol conversion unit are disposed inside the housing;
the first input port is configured to be coupled to a plurality of photovoltaic modules connected in series, and receive a direct current of the plurality of photovoltaic modules connected in series;
an input end of the protection unit is coupled to the first input port, and the protection unit is configured to disconnect the first input port from the first output port when a voltage value and/or a current value of a direct current input by the first input port exceeds a specified threshold;
an input end of the converter is coupled to an output end of the protection unit, and an output end of the converter is coupled to the first output port and is configured to convert the direct current input by the first input port into a direct current with a specified voltage; and
the protocol conversion unit is coupled between the second input port and the second output port, and is configured to convert a communication protocol that is of the plurality of photovoltaic modules connected in series and that is input by the second input port into a communication protocol different from the communication protocol of the plurality of photovoltaic modules connected in series.

2. The photovoltaic connection module according to claim 1, wherein the protection unit comprises a control unit (311), a sampling circuit (312), and a switch circuit (313);
the switch circuit is electrically connected between the first input port and the first output port, and is configured to transmit, to the first output port, the direct current input by the first input port;
an input end of the sampling circuit is coupled between the first input port and the switch circuit, an output end of the sampling circuit is coupled to an input end of the control unit, and the sampling circuit is configured to collect the voltage value and/or the current value of the direct current input by the first input port; and
an output end of the control unit is coupled to the switch circuit, and is configured to: receive the voltage value and/or the current value of the direct current input by the first input port; and when the voltage value and/or the current value of the direct current input by the first input port exceed/exceeds the specified threshold, control the switch circuit to be in a disconnected state.

3. The photovoltaic connection module according to claim 2, wherein the switch circuit is a high-voltage-resistant MOS transistor.

4. The photovoltaic connection module according to any one of claims 1 to 3, wherein the converter is a direct-current/direct-current converter.

5. The photovoltaic connection module according to any one of claims 1 to 3, wherein the protocol conversion unit is specifically configured to convert a power line carrier communication protocol of the plurality of photovoltaic modules connected in series into a controller area network communication protocol.

6. The photovoltaic connection module according to any one of claims 1 to 3, wherein the first input port and the first output port are pluggable interfaces.

7. The photovoltaic connection module according to any one of claims 1 to 3, wherein the second input port is coupled to the first input port.

8. A communication power supply, comprising:
at least one photovoltaic connection module according to any one of claims 1 to 7; and
a monitoring module, which is separately coupled to the at least one photovoltaic connection module, and is configured to control the at least one photovoltaic connection module.

9. A photovoltaic power generation system, comprising:
a plurality of photovoltaic modules, wherein the plurality of photovoltaic modules are grouped into at least one group, and photovoltaic modules in each group are connected in series; and
at least one photovoltaic connection module according to any one of claims 1 to 7, wherein the at least one group of photovoltaic modules is separately coupled to the at least one photovoltaic connection module.
